(19) **Europäisches Patentamt / European Patent Office / Office européen des brevets**

(11) **EP 2 582 753 B1**

(12) **FASCICULE DE BREVET EUROPEEN**

(45) Date de publication et mention de la délivrance du brevet:
**22.03.2017 Bulletin 2017/12**

(21) Numéro de dépôt: **11727431.6**

(22) Date de dépôt: **20.06.2011**

(51) Int Cl.:
**C08L 53/00** *(2006.01)*   **C08L 53/02** *(2006.01)*
**C08J 9/10** *(2006.01)*   **F16J 15/00** *(2006.01)*

(86) Numéro de dépôt international:
**PCT/EP2011/060250**

(87) Numéro de publication internationale:
**WO 2011/157852 (22.12.2011 Gazette 2011/51)**

(54) **COMPOSITION ÉLASTOMÉRIQUE RÉTICULÉE, ET PRODUIT COMPRENANT UNE TELLE COMPOSITION**

VERNETZTE ELASTOMERZUSAMMENSETZUNG UND PRODUKT MIT EINER DERARTIGEN ZUSAMMENSETZUNG

CROSS-LINKED ELASTOMER COMPOSITION AND PRODUCT INCLUDING SUCH A COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2010 FR 1054860**

(43) Date de publication de la demande:
**24.04.2013 Bulletin 2013/17**

(73) Titulaire: **MCPP France**
**85130 Tiffauges (FR)**

(72) Inventeurs:
- **PICOT, Fabrice**
  **F-85130 Tiffauges (FR)**

- **SAKKAS, Démosthène**
  **F-44000 Nantes (FR)**
- **GRUDET, Aline**
  **F-44190 Clisson (FR)**

(74) Mandataire: **Casalonga**
**Casalonga & Partners**
**Bayerstraße 71/73**
**80335 München (DE)**

(56) Documents cités:
**WO-A1-2010/098932   WO-A2-2006/102154**
**WO-A2-2006/113000**

EP 2 582 753 B1

**Description**

La présente invention concerne les compositions élastomériques, et notamment les compositions à base de thermoplastiques élastomères. De telles compositions sont utilisées notamment dans le domaine de l'étanchéité en bâtiment, pour des applications en automobile ou pour la fabrication de produits de grande consommation nécessitant une résistance à la compression élevée.

Les joints destinés à des applications en automobile ou dans le bâtiment doivent avoir des dimensions stables, offrir une faible déformation rémanente à la compression (DRC) et présenter des caractéristiques d'étanchéité définies sur une large gamme de températures pouvant aller jusqu'à 100°C. Par ailleurs, de tels joints doivent être capables d'isoler du bruit, du vent et de l'eau tout en étant résistant aux ultra-violets (U.V.) pendant une durée prolongée. Dans le même temps, la composition doit garder ses propriétés de souplesse et d'élasticité requises pour ce domaine d'application.

Historiquement, les joints étaient fabriqués à partir de mélanges à base de polychlorure de vinyle (PVC). Cependant, de telles compositions contiennent, et libèrent en cas de combustion, des molécules halogénées, ce qui a nécessité la recherche d'autres compositions pouvant remplacer ces compositions halogénées. De plus, il était également nécessaire d'améliorer les propriétés physiques de ces compositions pour élargir la gamme d'application.

Les alternatives proposées sont principalement : les caoutchoucs, et en particulier ceux à base d'éthylène-propylène diène monomère (EPDM), les thermoplastiques élastomères vulcanisés (TPE-V) et les thermoplastiques élastomères à motifs styréniques (TPE-S). Cependant, ces alternatives présentent un ou plusieurs inconvénients pour le domaine d'application présent, notamment une mauvaise aptitude à la coloration, un mauvais aspect de surface, des problèmes d'odeur, etc.

L'invention vise à remédier à ces inconvénients.

L'invention a pour but de proposer, selon un premier aspect, une composition économique, de préférence dépourvue de composés halogénés, permettant d'obtenir un compromis amélioré entre une faible déformation rémanente à la compression, un aspect extérieur mat ou satiné et une stabilité à l'exposition aux ultra-violets.

Cette composition comprend :

-    un copolymère multibloc d'éthylène et d'alpha-oléfine comportant des motifs polymérisés d'éthylène et d'alpha-oléfine, par exemple entre 5 et 50% en poids, de préférence entre 9 et 25% en poids,
-    un élastomère comprenant un copolymère bloc présentant au moins deux blocs aromatiques, identiques ou différents, séparés par au moins un bloc élastomérique, le copolymère bloc étant un copolymère tri blocs styrène-éthylène/butylène-styrène (SEBS) ou un copolymère tri blocs styrène-butadiène-styrène (SBS), par exemple entre 3 et 50% en poids, et
-    un polymère réticulable, le polymère réticulable étant un polybutadiène ou un copolymère tri blocs styrène-butadiène-styrène (SBS), par exemple entre 3 et 50% en poids, de préférence entre 4 et 30% en poids, et
-    des huiles pour caoutchoucs thermoplastiques.

On entend par bloc élastomérique, un bloc dont la température de transition vitreuse $T_g$ est inférieure à la température ambiante, et de préférence est inférieure à 0°C. La température de transition vitreuse est mesurée par exemple par analyse calorimétrique différentielle, selon la norme ISO 11357-2.

Le copolymère multibloc d'éthylène et d'alpha-oléfine est défini notamment dans les demandes de brevet WO2006/10196 et WO2006/101930 Le copolymère est un polymère particulièrement résistant aux ultra-violets, et présentant une déformation rémanente à la compression (DRC) faible. Il permet notamment de limiter le vieillissement, dû aux ultra-violets, de la composition, sans nécessiter l'ajout de pigments noirs ou d'autres additifs qui diminuent certaines propriétés du produit.

On entend par polymère réticulable, un polymère dont les macromolécules peuvent se lier entre elles par une réaction chimique, se produisant lors d'une polymérisation, d'une polycondensation ou d'une polyaddition par exemple. Le polymère réticulable permet, notamment en apportant des points de réticulation dans la composition, d'apporter un aspect mat ou satiné à la composition, et permet de réduire la déformation rémanente à la compression. Il permet également une meilleure tenue d'une composition comprenant éventuellement un élastomère partiellement insaturé, lors d'une exposition prolongée aux ultra-violets, en comparaison avec la composition non-réticulée. Le polymère réticulable peut être identique ou différent du copolymère bloc présentant au moins deux blocs aromatiques, identiques ou différents, séparés par au moins un bloc élastomérique.

Enfin, le copolymère bloc présentant au moins deux blocs aromatiques, identiques ou différents, séparés par au moins un bloc élastomérique, permet la formation de nodules des blocs aromatiques au sein de la composition, tandis que les blocs élastomériques vont s'associer au polymère réticulable et/ou au copolymère multibloc d'éthylène et d'alpha-oléfine. A température ambiante, les nodules, qui présentent une température de transition vitreuse supérieure à la température ambiante, sont alors à l'état vitreux et donc assimilables à des noeuds de réticulation, ce qui crée une pseudo-réticulation physique en supplément de la réticulation chimique apportée par le polymère réticulable. Il convient de noter que la réticulation physique et la réticulation chimique peuvent être dues au même polymère, par exemple lorsqu'on utilise du SBS. On obtient alors, en comparaison avec la composition non-réticulée, une composition présentant une déformation rémanente à la compression faible, mais également une meilleure résistance aux ultra-violets, tout en restant notamment extrudable grâce à une réticulation chimique contrôlée. Lorsque le copolymère bloc est du SEBS, la composition peut comprendre entre 3 et 50% en poids de SEBS, de préférence entre 4 et 30%, et encore plus préférentiellement entre 10 et 20% en poids. Lorsque le copolymère bloc est du SBS, la composition peut comprendre entre 3 et 50% en poids de SBS, de préférence entre 4 et 30%.

Le polymère réticulable est un polybutadiène ou un copolymère tri blocs styrène-butadiène-styrène (SBS). Lorsque le polymère réticulable est du SBS, la composition peut comprendre entre 3 et 50% en poids de SBS, de préférence entre 4 et 30%. Lorsque le polymère réticulable est un polybutadiène, la composition peut comprendre entre 3 et 50% en poids de polybutadiène, de préférence entre 4 et 30%, et encore plus préférentiellement entre 4% et 6% en poids.

Selon un mode de réalisation, le polymère réticulable est du 1,2-polybutadiène syndiotactique.

Le copolymère tri blocs styrène-butadiène-styrène (SBS) est un copolymère tri blocs dont les extrémités sont des blocs styrène et le bloc élastomérique central est un copolymère de butadiène. Le SBS permet d'obtenir un aspect mat plus prononcé, tandis que le polybutadiène, et notamment le 1,2-polybutadiène syndiotactique en mélange avec du SEBS, permet d'obtenir une plus faible déformation rémanente à la compression, une meilleure tenue aux ultra-violets et un aspect mat ou satiné.

Le bloc élastomérique du copolymère bloc présentant au moins deux blocs aromatiques, identiques ou différents, séparés par au moins un bloc élastomérique, comprend préférentiellement au moins des motifs éthylène et des motifs butylène. Le bloc élastomérique est choisi de manière à présenter une compatibilité avec les autres polymères de la composition.

Les blocs aromatiques du copolymère bloc présentant au moins deux blocs aromatiques, identiques ou différents, séparés par au moins un bloc élastomérique, comprennent un motif styrène. Les blocs aromatiques sont choisis d'une part de manière à être peu compatibles avec le bloc élastomérique, et d'autre part de manière à présenter une température de transition vitreuse supérieure à la température ambiante. Les blocs aromatiques vont alors former des nodules dans la composition. Ces nodules sont, à température ambiante, à l'état vitreux et créent une pseudo-réticulation physique conférant au produit final ses propriétés mécaniques d'élasticité et de résistance.

Avantageusement, la masse molaire des motifs styrène du copolymère bloc présentant au moins deux blocs aromatiques, identiques ou différents, séparés par au moins un bloc élastomérique, représente entre 10 et 50%, et de préférence entre 10% et 30% de la masse molaire totale du copolymère bloc. Le pourcentage de motifs styrène est choisi de manière à ce que les blocs aromatiques soient peu compatibles avec le bloc élastomérique.

Le copolymère bloc présentant au moins deux blocs aromatiques, identiques ou différents, séparés par au moins un bloc élastomérique, est un copolymère tri blocs styrène-éthylène/butylènestyrène (SEBS) ou un copolymère tri blocs styrène-butadiène-styrène (SBS).

Le SBS est un copolymère présentant une faible déformation rémanente à la compression, et permet également d'introduire dans la composition une quantité d'huile, ce qui permet de réduire le coût global de la composition. Le SEBS est un copolymère tri blocs dont les extrémités sont des blocs styrène et le bloc élastomérique central est un copolymère statistique éthylène/butylène. Le SEBS est choisi plus particulièrement pour sa résistance aux ultra-violets plus élevée.

Le copolymère multibloc d'éthylène et d'alpha-oléfine présente un indice de bloc moyen de 0,1 à 0,3 et un indice de distribution des masses moléculaires (ou indice de polymolécularité), $M_w/M_n$, supérieur à 1,3, de préférence entre 1,7 et 3,5. L'indice de bloc moyen et la méthode de détermination de cet indice, sont notamment définis dans la demande de brevet WO2006/101966.

Le copolymère multibloc d'éthylène et d'alpha-oléfine présente une masse volumique inférieure à 0,91 g/cm$^3$, par exemple comprise entre 0,89 et 0,91g/cm$^3$. Le copolymère multibloc peut également présenter un indice de fluidité à chaud de 0,1 à 0,3 g/10 min, voire de 1,2 à 2 g/10 min.

L'alpha-oléfine est choisie parmi le propylène, le 1-butène, le 1-hexène, le 1-octène, le 4-méthyl-1-pentène, le norbornène, le 1-décène, le 1,5-hexadiène, ou une combinaison de tels composés.

Le copolymère multibloc d'éthylène et d'alpha-oléfine présente au moins un point de fusion $T_m$, en degré Celsius, et une masse volumique d, en gramme par centimètre cube, dont les valeurs numériques satisfont les relations :

$$T_m > -2002{,}9 + 4538{,}5(d) - 2422{,}2(d)^2,$$

de préférence :

$$T_m > -6288,1 + 13141(d)-6720,3(d)^2,$$

et mieux :

$$T_m > 858,91 - 1825,3(d)+1112,8(d)^2.$$

Le copolymère multibloc peut comprendre un ou plusieurs segments durs comportant au moins 98% en poids d'éthylène, et un ou plusieurs segments mous comportant moins de 95% en poids, de préférence moins de 50% en poids, d'éthylène. Préférentiellement, les segments durs sont présents en une quantité de 5 à 85% en poids. La teneur en éthylène dans le copolymère bloc peut être supérieure à 50% en mole.

La composition peut également comprendre des charges renforçantes ou inertes telles que : le carbonate de calcium, des argiles, la silice, le talc, le noir de carbone, le dioxyde de titane, des plastifiants, des agents de mise en oeuvre, des antioxydants, des anti-ultra-violets, des cires et autres stabilisants, des pigments, des agents glissants, des lubrifiants, des anti-statiques, des agents anti-rayures, des agents d'expansion physiques ou chimiques et autres adjuvants de formulation. Il est également possible d'ajouter dans la composition des agents d'expansion de la famille des azodicarbanamides, sulfo-hydrazides, bicarbonates, urées ou les agents d'expansion microcellulaires contenant des gaz pressurisés ou des liquides volatiles.

La composition selon le premier aspect présente ainsi des propriétés de souplesse et d'élasticité sur un large domaine de températures, présente un aspect mat ou satiné, une bonne aptitude à la coloration et ne pose pas de problème d'odeur. De plus, lorsque la composition comprend le polybutadiène, elle présente une tenue améliorée aux ultra-violets. Ces propriétés rendent ainsi la composition selon le premier aspect particulièrement adaptée à un large choix d'applications.

Selon un deuxième aspect, il est proposé un produit comprenant une composition selon le premier aspect. Le produit peut notamment être fabriqué par extrusion ou injection de la composition selon le premier aspect.

Le produit peut être un produit injecté ou extrudé, pour des applications automobiles ou pour des applications de surmoulage, par exemple grips, ustensiles de cuisine, articles de sport, etc.

Le produit peut comprendre une composition comportant des agents d'expansion physiques ou chimiques tels que décrits précédemment, et peut être un produit expansé.

Selon un troisième aspect de l'invention, il est proposé d'utiliser un produit selon le deuxième aspect, comme joint d'étanchéité.

Le joint d'étanchéité peut être utilisé pour le bâtiment (immeuble), pour un véhicule automobile ou pour une application industrielle (appareil ménager tel que réfrigérateur, machine à laver).

On considère à présent, comme mode de réalisation privilégié d'un produit, notamment un joint d'étanchéité, une composition C1 comprenant :

- 21.8% en poids de copolymère multibloc d'éthylène et d'alpha-oléfine (Infuse D9000 de DOW),
- 5.9% en poids de polypropylène homopolymère,
- 2.9% en poids de polyéthylène à moyenne densité,
- 10.6% en poids de SBS (SBS radial, non étendu à l'huile, de haut poids moléculaire et contenant 30% de styrène),
- 26% en poids d'huile paraffinique (huile blanche paraffinique hautement raffinée),
- 32.3% en poids de craie 5$\mu$m (Durcal 5 (Omya) ou CRAIE DRB 20 (Imerys Minéraux)),
- 0.35% en poids d'un système de protection (IRGANOX 1076 FD ou CHIMASSORB 944 FDL ou TINUVIN 327 de CIBA SPECIALITES CHIMIQUES SA (ADDITIFS), ou IRGAFOS 16 de BASF),
- 0.09% en poids d'un peroxyde ($\alpha,\alpha$'-bis(t-butylperoxy)diisopropylbenzene) et
- 0.06% en poids d'un co-agent triallyl cyanurate (TAC) : TAC DL70 de LEHVOSS).

La composition C1 comprend donc 21.8% en poids d'un copolymère multi d'éthylène et d'alpha-oléfine et 10.6% en poids d'un polymère réticulable présentant au moins deux blocs aromatiques, identiques ou différents, séparés par au moins un bloc élastomérique. Le SBS joue donc à la fois le rôle d'agent réticulable (grâce aux doubles liaisons) et d'élastomère particulier capable de former des nodules grâce aux blocs styrène.

La composition peut être réalisée sous forme de granulés ou bien directement lors de la fabrication d'un produit injecté ou extrudé tel qu'un joint d'étanchéité. Ainsi, lorsqu'elle est réalisée sous forme de granulés, la composition C1 peut être préparée par mélange à sec, à température ambiante, de ses différents ingrédients solides puis par extrusion.

La composition C1 présente les propriétés suivantes :

- une dureté (mesurée selon la norme ISO 868) de 60 Shore A,
- une déformation rémanente à la compression (mesuré selon la norme ISO 815, c'est-à-dire pendant 22 heures, à 70°C) de 41% et
- un aspect mat.

La composition C1 permet ainsi d'obtenir un produit présentant des propriétés de tenue dans le temps et de résistance, apte à son utilisation dans le bâtiment ou dans l'automobile. En particulier, la composition présente un aspect mat, grâce notamment au SBS utilisé.

On considère un deuxième mode de réalisation d'un produit, notamment un joint d'étanchéité, dans lequel la composition C2 comprend :

- 13.6% en poids de copolymère multibloc d'éthylène et d'alpha-oléfine (Infuse D9000 de DOW),
- 11.3% en poids de polypropylène homopolymère (100-GB006 (INEOS) ou PP 571P (SABIC) ou PPH3060 (TOTAL)),
- 4.2% en poids de polyéthylène à moyenne densité (Lupolen 3721C de LyonDellBasell),
- 13.6% en poids de SEBS (Kraton G6151 1 ES de Kraton Polymer),
- 4.7% en poids de 1,2-polybutadiène (RB830 de JSR Corporation)
- 37% en poids d'huile paraffinique (Primol 352 de ESSO),
- 14.8% en poids de craie 5$\mu$m (Durcal 5 (Omya) ou CRAIE DRB 20 (Imerys Minéraux)),
- 0.72% en poids d'un système de protection (IRGANOX 1076 FD ou CHIMASSORB 944 FDL ou TINUVIN 327 de CIBA SPECIALITES CHIMIQUES SA (ADDITIFS), ou IRGAFOS 16 de BASF),
- 0.05% en poids d'un peroxyde (LUPEROX F40 de SAFIC ALCAN) et
- 0.03% en poids d'un agent TAC (co agent triallyl cyanurate (TAC) : TAC DL70 de LEHVOSS).

La composition C2 comprend donc 13.6% en poids d'un copolymère multibloc d'éthylène et d'alpha-oléfine, 13.6% en poids d'un copolymère bloc présentant au moins deux blocs aromatiques, identiques ou différents, séparés par au moins un bloc élastomérique, et 4.7% en poids d'un polybutadiène jouant le rôle d'agent réticulant.

La composition peut être réalisée sous forme de granulés ou bien directement lors de la fabrication d'un produit injecté ou extrudé tel qu'un joint d''étanchéité. Ainsi, lorsqu'elle est réalisée sous forme de granulés, la composition C2 peut être préparée par mélange à sec, à température ambiante, de ses différents ingrédients solides puis par extrusion.

La composition C2 présente les propriétés suivantes :

- une dureté (mesurée selon la norme ISO 868) de 60 Shore A,
- une déformation rémanente à la compression (mesuré selon la norme ISO 15, c'est-à-dire pendant 22 heures, à 70°C) de 36%,
- un aspect satiné,
- une résistance au vieillissement aux ultra-violets plus longue.

La composition C2 permet ainsi d'obtenir un produit présentant des propriétés de tenue dans le temps et de résistance, apte à son utilisation dans le bâtiment ou dans l'automobile. Par ailleurs, la composition ne présente pas un aspect brillant, mais satiné, en raison du mélange de SEBS avec le polymère réticulable RB830 qui conduit à un aspect mat moins prononcé, mais à une résistance aux ultra-violets plus importante. De plus, il est également possible de colorer la composition, afin d'obtenir un produit final coloré. En particulier, la résistance élevée aux ultra-violets permet de colorer le produit avec des teintes claires, bien que celles-ci accélèrent généralement le vieillissement du produit.

On considère un troisième mode de réalisation d'un produit, notamment un joint d'étanchéité, dans lequel la composition C3 comprend :

- 14% en poids de copolymère multibloc d'éthylène et d'alpha-oléfine (Infuse D9000 de DOW),
- 13% en poids de polypropylène homopolymère (100-GB006 (INEOS) ou PP 571P (SABIC) ou PPH3060 (TOTAL)),
- 3% en poids de polyéthylène à moyenne densité (Lupolen 3721C de LyonDellBasell),
- 5.9% en poids de 1,2-polybutadiène (RB830 de JSR Corporation)
- 12.5% en poids de SEBS (Kraton G6151 ES de Kraton Polymer),
- 36% en poids d'huile paraffinique (Primol 352 de ESSO),
- 14.8% en poids de craie 5$\mu$m (Durcal 5 (Omya) ou CRAIE DRB 20 (Imerys Minéraux)),
- 0.62% en poids d'un système de protection (IRGANOX 1076 FD ou CHIMASSORB 944 FDL ou TINUVIN 327 de CIBA SPECIALITES CHIMIQUES SA (ADDITIFS), ou IRGAFOS 16 de BASF),
- 0.12% en poids d'un peroxyde (LUPEROX F40 de SAFIC ALCAN) et
- 0.06% en poids d'un agent TAC (co agent triallyl cyanurate (TAC) : TAC DL70 de LEHVOSS).

La composition C3 comprend donc 14% en poids d'un copolymère multi d'éthylène et d'alpha-oléfine, 12.5% en poids d'un polymère réticulable présentant au moins deux blocs aromatiques, identiques ou différents, séparés par au moins un bloc élastomérique, et 5.9% en poids d'un polybutadiène jouant le rôle d'agent réticulant.

La composition peut être réalisée sous forme de granulés ou bien directement lors de la fabrication d'un produit injecté ou extrudé tel qu'un joint d'étanchéité. Ainsi, lorsqu'elle est réalisée sous forme de granulés, la composition C3 peut être préparée par mélange à sec, à température ambiante, de ses différents ingrédients solides puis par extrusion.

La composition C3 présente les propriétés suivantes :

- une dureté (mesurée selon la norme ISO 868) de 65 Shore A,
- une déformation rémanente à la compression (mesuré selon la norme ISO 815, c'est-à-dire pendant 22 heures, à 70°C) de 36% et
- un aspect satiné,
- une résistance au vieillissement aux ultra-violets plus longue.

La composition C3 permet ainsi d'obtenir un produit présentant des propriétés de tenue dans le temps et de résistance, apte à son utilisation dans le bâtiment ou dans l'automobile. Par ailleurs, la composition ne présente pas un aspect brillant, mais satiné, en raison du mélange de SEBS avec le polymère réticulable RB830 qui conduit à un aspect mat moins prononcé, mais à une résistance aux ultra-violets plus importante.

On considère un quatrième mode de réalisation d'un produit, notamment un joint d'étanchéité, dans lequel la composition C4 comprend :

- 13% en poids de copolymère multibloc d'éthylène et d'alpha-oléfine (Infuse D9000 de DOW),
- 14.6% en poids de polypropylène homopolymère (100-GB006 (INEOS) ou PP 571P (SABIC) ou PPH3060 (TOTAL)),
- 4% en poids de polyéthylène à moyenne densité (Lupolen 3721C de LyonDellBasell),
- 4.7% en poids de 1,2-polybutadiène (RB830 de JSR Corporation)
- 13% en poids de SEBS (Kraton G6151 ES de Kraton Polymer),
- 35% en poids d'huile paraffinique (Primol 352 de ESSO),
- 14.3% en poids de craie 5$\mu$m (Durcal 5 (Omya) ou CRAIE DRB 20 (Imerys Minéraux)),
- 1.22% en poids d'un système de protection (IRGANOX 1076 FD ou CHIMASSORB 944 FDL ou TINUVIN 327 de CIBA SPECIALITES CHIMIQUES SA (ADDITIFS), ou IRGAFOS 16 de BASF),
- 0.12% en poids d'un peroxyde (LUPEROX F40 de SAFIC ALCAN) et
- 0.06% en poids d'un agent TAC (co agent triallyl cyanurate (TAC) : TAC DL70 de LEHVOSS).

La composition C4 comprend donc 13% en poids d'un copolymère multi d'éthylène et d'alpha-oléfine, 13% en poids d'un polymère réticulable présentant au moins deux blocs aromatiques, identiques ou différents, séparés par au moins un bloc élastomérique, et 4.7% en poids d'un polybutadiène jouant le rôle d'agent réticulant.

La composition peut être réalisée sous forme de granulés ou bien directement lors de la fabrication d'un produit injecté ou extrudé tel qu'un joint d'étanchéité. Ainsi, lorsqu'elle est réalisée sous forme de granulés, la composition C4 peut être préparée par mélange à sec, à température ambiante, de ses différents ingrédients solides puis par extrusion.

La composition C4 présente les propriétés suivantes :

- une dureté (mesurée selon la norme ISO 868) de 70 Shore A,
- une déformation rémanente à la compression (mesuré selon la norme ISO 815, c'est-à-dire pendant 22 heures, à 70°C) de 40% et
- un aspect satiné,
- une résistance au vieillissement aux ultra-violets plus longue.

La composition C4 permet ainsi d'obtenir un produit présentant des propriétés de tenue dans le temps et de résistance, apte à son utilisation dans le bâtiment ou dans l'automobile. Par ailleurs, la composition ne présente pas un aspect brillant, mais satiné, en raison du mélange de SEBS avec le polymère réticulable RB830 qui conduit à un aspect mat moins prononcé, mais à une résistance aux ultra-violets plus importante.

**Revendications**

1. Composition élastomérique réticulée comprenant :

   - un copolymère multibloc d'éthylène et d'alpha-oléfine comportant des motifs polymérisés d'éthylène et d'alpha-oléfine,

- un élastomère comprenant un copolymère bloc présentant au moins deux blocs aromatiques, identiques ou différents, séparés par au moins un bloc élastomérique, le copolymère bloc étant un copolymère tri blocs styrène-éthylènelbutylène-styrène (SEBS) ou un copolymère tri blocs styrène-butadiène-styrène (SBS)

- un polymère réticulable, le polymère réticulable étant un polybutadiène ou un copolymère tri blocs styrène-butadiène-styrène (SBS), et

- des huiles pour caoutchoucs thermoplastiques.

**2.** Composition selon la revendication 1 dans laquelle le polymère réticulable est du 1,2-polybutadiène syndiotactique.

**3.** Composition selon l'une des revendications précédentes dans laquelle le copolymère multibloc d'éthylène et d'alpha-oléfine présente un indice de bloc moyen de 0,1 à 0,3 et un indice de distribution des masses moléculaires, $M_w/M_n$, supérieur à 1,3.

**4.** Composition selon l'une des revendications précédentes dans laquelle le copolymère multibloc d'éthylène et d'alpha-oléfine présente une masse volumique inférieure à 0,91 g/cm$^3$.

**5.** Composition selon l'une des revendications précédentes dans laquelle l'alpha-oléfine représente du propylène, du 1-butène, du 1-hexène, du 1-octène, du 4-méthyl-1-pentène, du norbornène, du 1-décène, du 1,5-hexadiène, ou une combinaison de ces composés.

**6.** Composition selon l'une des revendications précédentes dans lequel le copolymère multibloc d'éthylène et d'alpha-oléfine présente au moins un point de fusion $T_m$, en degré Celsius, et une masse volumique d, en gramme par centimètre cube, dans lequel les valeurs numériques de ces variables satisfont les relations :

$$T_m > -2002,9 + 4538,5(d) - 2422,2(d)^2,$$

de préférence :

$$T_m > -6288,1 + 13141(d) - 6720,3(d)^2,$$

et mieux;

$$T_m > 858,91 - 1825,3(d) + 1112,8(d)^2.$$

**7.** Composition selon l'une des revendications précédentes comprenant un ou plusieurs agents d'expansion physiques ou chimiques, notamment des agents d'expansion de la famille des azodicarbonamides, sulfo-hydrazides, bicarbonates, urées ou des agents d'expansion microcellulaires contenant des gaz pressurisés ou des liquides volatiles.

**8.** Produit, notamment produit injecté ou extrudé, comprenant une composition selon l'une des revendications 1 à 7.

**9.** Produit selon la revendication précédente, comprenant une composition selon la revendication 7 et dans lequel le produit est expansé.

**10.** Utilisation d'un produit selon la revendication 8 ou 9 comme joint d'étanchéité.

**Patentansprüche**

**1.** Vernetzte Elastomerzusammensetzung, umfassend:

- ein Multiblockcopolymer von Ethylen und alpha-Olefin, das polymerisierte Einheiten von Ethylen und alpha-Olefin enthält,

- ein Elastomer, umfassend ein Blockcopolymer mit mindestens zwei gleichen oder verschiedenen aromatischen Blöcken, die durch mindestens einen Elastomerblock getrennt sind, wobei es sich bei dem Blockcopolymer um ein Styrol-Ethylen/Butylen-Styrol-Triblockcopolymer (SEBS-Triblockcopolymer) oder ein Styrol-Butadien-Styrol-Triblockcopolymer (SBS-Triblockcopolymer) handelt,

- ein vernetzbares Polymer, wobei es sich bei dem vernetzbaren Polymer um ein Polybutadien oder ein Styrol-Butadien-Styrol-Triblockcopolymer (SBS-Triblockcopolymer) handelt, und

- Öle für thermoplastische Kautschuke.

2. Zusammensetzung nach Anspruch 1, wobei es sich bei dem vernetzbaren Polymer um syndiotaktisches 1,2-Polybutadien handelt.

3. Zusammensetzung nach einem der vorhergehenden Ansprüche, wobei das Multiblockcopolymer von Ethylen und alpha-Olefin einen mittleren Blockindex von 0,1 bis 0,3 und einen Molekulargewichtsverteilungsindex, $M_w/M_n$, von mehr als 1,3 aufweist.

4. Zusammensetzung nach einem der vorhergehenden Ansprüche, wobei das Multiblockcopolymer von Ethylen und alpha-Olefin eine Dichte von weniger als 0,91 g/cm$^3$ aufweist.

5. Zusammensetzung nach einem der vorhergehenden Ansprüche, wobei das alpha-Olefin Propylen, 1-Buten, 1-Hexen, 1-Octen, 4-Methyl-1-penten, Norbornen, 1-Decen, 1,5-Hexadien oder eine Kombination dieser Verbindungen darstellt,

6. Zusammensetzung nach einem der vorhergehenden Ansprüche, wobei das Multiblockcopolymer von Ethylen und alpha-Olefin mindestens einen Schmelzpunkt $T_m$ in Grad Celsius und eine Dichte d in Gramm pro Kubikzentimeter aufweist, wobei die Zahlenwerte dieser Variablen den folgenden Beziehungen entsprechen:

$$T_m > -2002,9 + 4538,5(d) - 2422,2(d)^2,$$

vorzugsweise:

$$T_m > -6288,1 + 13141(d) - 6720,3(d)^2$$

und noch besser:

$$T_m > 858,91 - 1825,3(d) + 1112,8(d)^2.$$

7. Zusammensetzung nach einem der vorhergehenden Ansprüche, umfassend ein oder mehrere physikalische oder chemische Expansionsmittel, insbesondere Expansionsmittel aus der Familie der Azodicarbonamide, Sulfohydrazide, Hydrogencarbonate oder Harnstoffe oder mikrozelluläre Treibmittel, die mit Druck beaufschlagte Gase oder flüchtige Flüssigkeiten enthalten.

8. Produkt, insbesondere spritzgegossenes oder extrudiertes Produkt, umfassend eine Zusammensetzung nach einem der Ansprüche 1 bis 7.

9. Produkt nach dem vorhergehenden Anspruch, umfassend eine Zusammensetzung nach Anspruch 7, wobei das Produkt expandiert ist.

10. Verwendung eines Produkts nach Anspruch 8 oder 9 als Dichtung.

**Claims**

1. Crosslinked elastomeric composition comprising:

- a multiblock copolymer of ethylene and of alpha-olefin comprising polymerized units of ethylene and of alpha-olefin,

- an elastomer comprising a block copolymer having at least two aromatic blocks, which may be identical or different, separated by at least one elastomeric block, the block copolymer being a styrene-ethylene/butylene-styrene triblock copolymer (SEBS) or a styrene-butadiene-styrene triblock copolymer (SEBS),
- a cross-linkable polymer, the cross-linkable polymer being a polybutadiene or a styrene-butadiene-styrene triblock copolymer (SEBS), and
- oils for thermoplastic rubbers.

2. Composition according to Claim 1, in which the cross-linkable polymer is syndiotactic 1,2-polybutadiene.

3. Composition according to either of the preceding claims, in which the multiblock copolymer of ethylene and of alpha-olefin has an average block index of from 0.1 to 0.3 and a molecular weight distribution index, $M_w/M_n$, greater than 1.3.

4. Composition according to one of the preceding claims, in which the multiblock copolymer of ethylene and of alpha-olefin has a density of less than 0.91 $g/cm^3$.

5. Composition according to one of the preceding claims, in which the alpha-olefin represents propylene, 1-butene, 1-hexene, 1-octene, 4-methyl-1-pentene, norbornene, 1-decene, 1,5-hexadiene, or a combination of such compounds.

6. Composition according to one of the preceding claims, in which the multiblock copolymer of ethylene and of alpha-olefin has at least one melting point $T_m$, in degrees Celsius, and a volume d, in grams per $cm^3$, in which the numerical values of these variables satisfy the relationships:

$$T_m > -2002.9 + 4538.5(d) - 2422.2(d)^2,$$

preferably:

$$T_m > -6288.1 + 13141(d) - 6720.3(d)^2,$$

and better still:

$$T_m > 858.91 - 1825.3(d) + 1112.8(d)^2,$$

7. Composition according to one of the preceding claims, comprising one or more physical or chemical blowing agents, in particular blowing agents of the azodicarbonamide, sulfohydrazide, bicarbonate or urea family or microcellular blowing agents containing pressurized gases or volatile liquids.

8. Product, in particular an injection-molded or extruded product, comprising a composition according to one of Claims 1 to 7.

9. Product according to the preceding claim, comprising a composition according to Claim 7 and in which the product is expanded.

10. Use of a product according to Claim 8 or 9, as a leaktight seal.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200610196 A
- WO 2006101930 A
- WO 2006101966 A